# EUROPÄISCHE PATENTSCHRIFT

(11) **EP 2 576 091 B1**
(45) Veröffentlichungstag und Bekanntmachung des Hinweises auf die Patenterteilung: **25.11.2020**
(21) Anmeldenummer: 11735774.9
(22) Anmeldetag: 18.05.2011
(51) Int. Cl.: B09B 1/00, B01J 20/04, B01J 20/10, B01J 20/28, C04B 18/04, C04B 28/02, C04B 111/00

(54) **RÜCKSTANDSSALZHALDE MIT EINER ABDECKUNG**
RESIDUE SALT DUMP WITH A COVER LAYER
TERRIL DE RÉSIDUS DE SEL AVEC UNE COUCHE DE COUVERTURE

(30) Priorität: 27.05.2010 DE 102010021675
(43) Veröffentlichungstag der Anmeldung: 10.04.2013
(73) Patentinhaber: K+S Minerals and Agriculture GmbH, 34131 Kassel (DE)
(72) Erfinder: PALM, Albrecht, 39579 Garlipp (DE); KIND, Hans-Joachim, 39291 Hohenwarthe (DE); WESTPHAL, Martin, 39326 Wolmirstedt (DE)
(74) Vertreter: Patentanwälte Walther Hinz Bayer PartGmbB
(86) Internationale Anmeldenummer: PCT/DE2011/001083
(87) Internationale Veröffentlichungsnummer: WO 2011/147403

(56) Entgegenhaltungen:
- EP-A1- 0 280 753
- DD-A5- 201 649
- DE-A1-102008 015 012

## Beschreibung

Die Erfindung betrifft eine Rückstandssalzhalde mit einer Abdeckung (Infiltrationshemmschicht).

Bei der Verarbeitung von Rohsalzen, z. B. zur Kaliherstellung, fallen Rückstände an, die im Wesentlichen aus Salz bestehen. Der Rückstand wird, soweit er nicht anders entsorgt wird, aufgehaldet. Um möglichst wenig Grundfläche für eine solche Halde in Anspruch zu nehmen und um den Niederschlägen eine im Verhältnis möglichst kleine Oberfläche zum Volumen der Halde zu bieten, werden die Halden bevorzugt in Kegelstumpfform mit steilen Böschungen angelegt. Das Versickern von Haldenwasser in den Untergrund wird dadurch verhindert, dass viele Halden an der Basis eine Dichtung aufweisen. Die Halden sind üblicherweise von Gräben eingefasst, um das anfallende Haldenwasser zu fassen und geordnet ableiten zu können, wobei die Menge an Haldenwasser u. a. abhängig ist von der Niederschlagsmenge. Das Haldenwasser soll in der anfallenden Menge so gering wie möglich gehalten werden. Insofern sind bereits aus dem Stand der Technik verschiedene Verfahren zur Abdeckung von Halden auch zum Zwecke der Begrünung und Rekultivierung bekannt. Sinn und Zweck einer solchen Abdeckung ist, immer eine standsichere Abdeckung mit den unterschiedlichsten Materialien bereitzustellen, die weitestgehend verhindert, dass Niederschlagswasser in den Haldenkörper eindringt, dort zu Lösungsvorgängen führt, und das zuvor erwähnte Haldenwasser bildet.

In diesem Zusammenhang ist aus der DE-PS 39 25 953 bekannt, Halden mit einer abbindenden Schicht geschlossen zu überdecken. Hierbei besteht diese Schicht zum überwiegenden Teil aus Kalziumsulfat. Eine solche Abdeckung wird dann zusätzlich mit einer dünnen Schicht aus Erde oder Biomasse versehen, um eine Begrünung zu ermöglichen.

Bekannt aus der DE-OS 4 117 270 ist ebenfalls, Halden mit einer Filterasche-Zementsuspension zu versehen, um hierdurch die Oberfläche zu versiegeln.

Des Weiteren ist aus der DE-PS 43 37 730 bekannt, auf eine Salzhalde Bodenaushub und Bauschutt als Abdeckschicht aufzubringen. Hierbei wird zunächst eine aus grobkörnigem Gut bestehende Kontaktschicht auf die Halde aufgebracht und dann in einem zweiten Schritt Bodenaushub und Bauschutt in einer Mischung auf diese Kontaktschicht aufgelegt.

Eine Haldenabdeckung bestehend aus hydraulisch und/oder puzzolanisch abgebundenen Gemischen mineralischer Reststoffe als Haldenabdeckung ist in der DE-PS 196 32 154 beschrieben. Die Reststoffe umfassen insbesondere Aschen aus der Verbrennung von Klärschlamm, Biomassen und Holz und/oder gipshaltige Reststoffe. Diese Stoffgemische werden in Form einer angefeuchteten Masse in mehreren Schichten beginnend am Haldenfuß auf die Haldenoberfläche aufgebracht und zur Haldeninnenseite verdichtet.

Bekannt ist, dass Salzhalden aufgrund des Haldenkörperverhaltens (z. B. Viskoplastizität, Löslichkeit und Ummineralisation) nur schwerlich abzudecken sind.

Aus der DE 199 37 270 A1 ist eine Haldenabdeckung auch für eine Rückstandssalzhalde bekannt, bei der ein rolliges, krümeliges Grüngranulat auf die Halde aufgebracht wird. Das Grüngranulat umfasst salzhaltige Schlacken aus der Aluminiumherstellung sowie abbindefähige Kraftwerksaschen. Zum Abdecken einer Salzhalde werden etwa 20 t/m² des Grüngranulats benötigt, wobei von einer Mächtigkeit der Abdeckung im Mittel von ca. 15 m ausgegangen wird. Im Einzelfall ist die Abdeckung zwischen 5 und 25 m mächtig. Vorteilhaft hierbei ist, das vom Tag der Aufbringung an der Haldenwasseranteil signifikant vermindert wird. Nachteilig ist die Menge des benötigten Abdeckmaterials sowie die Sicherstellung der Qualität des Abdeckmaterials, insbesondere der physikalischen und biologischen Eigenschaften. Um eine Abdeckung der in ganz Europa vorhandenen Salzhalden mit dem zuvor beschriebenen Abdeckmaterial zu ermöglichen, wären Mengen erforderlich, die auch in Jahrhunderten nicht zur Verfügung stünden. Aus DE 10 2008 015 012 A1 ist eine Abdeckung bekannt, die aus eine komplett verfestigter Mischung besteht, ohne Möglichkeit sich selbst zu regenerieren.

Die der Erfindung zugrunde liegende Aufgabe besteht demzufolge darin, auf einfache und preiswerte Weise zu gewährleisten, dass die Infiltration des Niederschlagswassers in die Halde selbst dauerhaft gehemmt ist, mit dem Ziel der Verminderung des Haldenwasseranfalls.

Zu Lösung der Aufgabe wird ein Gemisch zum Aufbringen auf eine Rückstandssalzhalde vorgeschlagen, das sich dadurch auszeichnet, dass das Gemisch Rückstandssalze, was dem Haldenmaterial entspricht, sowie zumindest ein mineralisches, schwer bis unlösliches Additiv mit hydraulisch und/oder puzzolanisch abbindenden Eigenschaften aufweist.

Ein mineralisches, schwer bis unlösliches Additiv mit hydraulischen und/oder puzzolanischen Eigenschaften mit dem Rückstandssalz wird vermischt, wobei das Gemisch dann auf der Halde genau so abgesetzt wird, wie das Rückstandssalz selbst.

Dadurch, dass das Gemisch aus dem mindestens einen Additiv mit dem hydraulisch und/oder puzzolanisch abbindenden Eigenschaften und dem Rückstandsalz besteht, wird in der ersten Zeit bei auftreffendem Niederschlagswasser dieses Niederschlagswasser durch das Gemisch im Wesentlichen vollständig aufgenommen. Hierdurch verlangsamen sich die Lösungsvorgänge. Dies deshalb, weil durch die puzzolanisch und/oder hydraulisch abbindenden Eigenschaften des Additivs das Wasser anteilig gebunden wird. Im Laufe der Zeit finden Ablaugungsvorgänge im Bereich der Haldenoberfläche statt, die zur Folge haben, dass sich 'sui iuris' eine Oberfläche ausbildet (Infiltrationshemmschicht), die im Wesentlichen aus unlöslichen Bestandteilen besteht. Diese aus im Wesentlichen unlöslichen Bestandteilen bestehende Schicht kann sich selbst regenerieren. Hieraus folgt, dass diese Schicht über die Jahre anwächst. Eine solche Abdeckung, die sich kontinuierlich regeneriert, ist über die Zeit stand- und verformungssicher. Das hat zur Folge, dass bei Nährstoffauftrag auf die Halde sich eine solche Schicht selbst begrünt.

Durch eine solche Abdeckung mit einem Gemisch aus Haldenrückstand und dem Additiv wird zuverlässig die Infiltration von Niederschlagswasser in die Halde gehemmt. Das heißt, die Schicht wirkt als Infiltrationshemmschicht. Diese Infiltrationshemmschicht unterstützt die Speicherung und Verdunstung von Niederschlagswasser nachhaltig und hemmt somit die Niederschlagsinfiltration und damit den Haldenwasseranteil. Allerdings ist davon auszugehen, dass ein gewisser Anteil des Niederschlags in den Haldenkörper eindringt, was den rückstandsspezifischen viskoplastischen Verformungen entgegenwirkt. Das heißt, die Abdeckung ist in der Lage, sich haldenspezifischen Formänderung, wie sie im Laufe der Zeit auftreten, anzupassen.

Ein weiterer Vorteil neben einer signifikanten Verminderung des Haldenabwassers besteht darin, das auch eine bereits abgedeckte Halde erneut mit Rückstandssalz überschüttet werden kann. Das heißt, eine solche Halde ist trotz Abschluss dennoch, im Gegensatz zu einer nach dem Stand der Technik gemäß der DE 199 37 270 A1 abgedeckten Halde, entwicklungsfähig. Der Grund hierfür liegt darin, dass die entsalzene Abdeckschicht die gleichen physikalischen Eigenschaften aufweist, wie das Rückstandssalz selbst. Das heißt, der Böschungswinkel ändert sich auch bei erneutem Aufschütten nicht; die Standsicherheit ist somit aufgrund des gleichen Böschungswinkels gewährleistet.

Vorteilhaft ist darüber hinaus, dass im Zuge des regulären Aufhaldungsbetriebes das Abdeckmaterial bedarfsweise zugeführt werden kann, d. h., die Rückstandssalzhalde kann selbst während der Aufhaldung des Rückstandssalzes partiell abgedeckt werden, was bedeutet, dass der Anteil des Haldenwassers während der laufenden Aufhaldung entsprechend vermindert wird. Hierdurch ist die Entsorgung während des Aufbereitungsprozesses des Rohsalzes in jedem Fall gewährleistet.

Ein weiterer Vorteil besteht darin, dass durch die erfindungsgemäße Abdeckung die chemische Zusammensetzung des Haldenwassers nicht verändert wird; insofern können die vorhandenen Entsorgungswege beibehalten werden.

Vorteilhafte Merkmale ergeben sich aus den Unteransprüchen.

So ist insbesondere vorgesehen, dass das Additiv in schluffiger bis toniger Form vorliegt. In Verbindung mit puzzolanischen und und/oder hydraulischen Eigenschaften sind sie in der Lage freies Porenwasser, die sogenannte freie Restfeuchte, im Rückstandssalz zu binden. Hierbei können Aschen aus der Verbrennung von fossilen Energieträgern, insbesondere aus der Braunkohleverbrennung, sowie auch Rückstände aus der Aufbereitung von Stoffen aus Wärmebehandlungs- und Verbrennungsprozessen verwendet werden. Des Weiteren können Ton und/oder Gips Verwendung finden. Gegenstand der Erfindung ist auch ein Gemisch aus Additiven aus den zuvor erwähnten Bestandteilen.

Die Wahl des Additivs und damit des Gemisches aus Feststoffanteilen ist u. a. abhängig von der Zusammensetzung des Rückstands und auch den klimatischen Bedingungen und ist insbesondere abhängig von der durchschnittlichen Niederschlagsmenge pro Jahr. Wesentlich ist allerdings auch die Lage der Oberfläche, die auf der Halde abgedeckt wird. So ist insbesondere zu beachten, dass die Wetterseite gegebenenfalls eine Schicht größerer Mächtigkeit aufweist als die Böschung der Halde, die auf der dem Wetter abgewandten Seite liegt.

Nach einem besonders vorteilhaften Merkmal der Erfindung beträgt der Anteil des Additivs am Gesamtgemisch 1 -10 Masse %, vorzugsweise 3 bis 7 Masse %. Mit solchen Werten ergibt sich eine Oberfläche auf der Halde, die zuverlässig bereits nach kurzer Zeit die Infiltration von Oberflächenwasser hemmt.

Vorgesehen ist des Weiteren, dass das Additiv bzw. die einzelnen Bestandteile des Additivs in Partikelform vorliegen.

Gegenstand der Erfindung ist eine Rückstandssalzhalde die sich durch eine Abdeckung mit einem Gemisch der zuvor beschriebenen Art auszeichnet. Hierbei ist vorgesehen, dass das Gemisch in einer Mächtigkeit von mehreren Metern auf die Halde aufgebracht wird. Bei einer Mächtigkeit von mehreren Metern ist es auch völlig gleich, wenn lokale Erosionen auftreten oder sich Risse bilden, da sich die Infiltrationshemmschicht im Zuge der kontinuierlich ablaufenden Lösungsprozesse 'sui iuris' immer wieder nachbildet. Das heißt, eine in solcher Weise abgedeckte Halde verfügt über ein Selbstheilungsvermögen, und ist im Wesentlichen in Bezug auf die Oberflächenabdeckung nachsorgefrei. Darüber hinaus erfordert eine solche Infiltrationshemmschicht, die durch das Aufbringen des erfindungsgemäßen Gemisches gebildet wird, im Wesentlichen keinen zusätzlichen Flächenmehrverbrauch im Haldenvorland, da der Anteil des Additivs mit 1% bis 10% in Bezug auf die Menge an Rückstandssalz kaum ins Gewicht fällt.

Durch die Beimischung des Additivs zum Rückstand werden die mechanischen Eigenschaften des Rückstandes nicht verändert, d. h. der Schüttwinkel verändert sich nicht. Deshalb kann das Gemisch auf rückstandshaldentypische Böschungen und Plateaubereiche aufgebracht werden.

Es wurde beispielhaft herausgefunden, dass bei einer Zugabe von 5 Masse-% unlöslicher Additive wie z. B. Asche und Gips mit den zuvor genannten Eigenschaften in das Rückstandssalz, bei einem Jahresniederschlag von durchschnittlich 600 mm sich eine Infiltrationshemmschicht mit einer Dicke von circa 8 mm pro Jahr ausbildet. Aufgrund der Eigenschaften der unlöslichen Feststoffe und ihrer Wechselwirkungen mit dem Rückstandsmaterial und der Feuchte des Rückstandsmaterials weist die Infiltrationshemmschicht eine dauerhafte Stabilität und Standsicherheit auf. Eventuelle Erosionen an exponierten Lagen, zum Beispiel an sehr steilen Böschungen bedingt durch Wasser oder auch an Kanten bedingt durch Wind, erneuern sich im Zuge der kontinuierlich ablaufenden Lösungsprozesse ständig. Die Leistungsfähigkeit der Infiltrationshemmschicht im Hinblick auf das Speichervermögen und die Unterstützung der Verdunstung erhöht sich mit wachsender Schichtstärke. Die Infiltrationshemmschicht durchläuft im Zuge ihrer längjährigen Entwicklung in Folge klimatischer Einflüsse und Nährstoffanreicherung einen quasi dem Bodenbildungsprozess ähnlichen Transformationsprozess, der die Ansiedlung angepasster Pflanzen begünstigt.

Anhand eines Beispieles soll die Erfindung nachstehend näher erläutert werden. So zeigen
- Fig. 1: schematisch eine Rückstandshalde;
- Fig. 2: eine frische Schüttung mit dem erfindungsgemäßen Gemisch;
- Fig. 3: die beginnende Ausbildung einer Infiltrationshemmschicht infolge niederschlagsbedingter Lösung und Ablagerung nach etwa 1 bis 3 Jahren;
- Fig. 4: eine Infiltrationshemmschicht gemäß Fig. 3 im 4. Jahr.

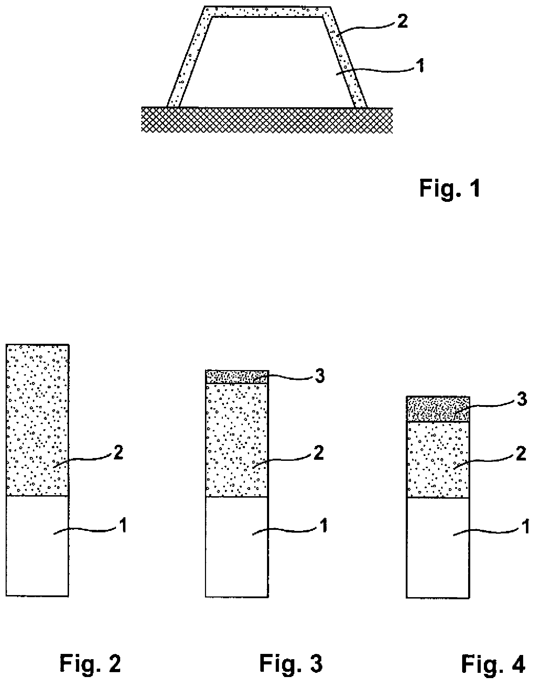

Fig. 1 zeigt schematisch eine Rückstandssalzhalde, wobei das eigentliche Haldenmaterial mit 1 bezeichnet ist, und das auf der Halde aufgebrachte erfindungsgemäße Gemisch mit einer Mächtigkeit von etwa 10 m mit 2.

Unmittelbar nach Aufbringen des Gemisches wirkt diese Schicht infiltrationshemmend, wie sich dies Fig. 2 entnehmen lässt. Im Laufe der Zeit erfolgt niederschlagsbedingt eine Lösung und Ablaugung an der Oberfläche des erfindungsgemäßen Gemisches. Diese sich herausbildende Infiltrationshemmschicht in Fig. 3 mit 3 bezeichnet, zeichnet sich dadurch aus, dass sie infolge von Lösungs- und Ablaugungsvorgängen im Wesentlichen nur noch aus unlöslichen Anteilen besteht. Diese sich 'sui iuris' herausbildende Infiltrationshemmschicht 3 verzeichnet einen Zuwachs von ca. 0,8 bis 1 cm im Jahr. Das heißt, dass sie im Laufe der Zeit immer stärker wird. Im 4. Jahr weist sie eine Dicke von > 3 cm auf, wobei die Dicke über die Jahre weiterhin zunimmt. Aus der Darstellung gemäß den Fig. 2 bis 4 wird auch deutlich, dass die Infiltrationshemmschicht sich über die Zeit immer wieder selbst zu regenerieren in der Lage ist. Bilden sich beispielsweise in der Oberfläche der Infiltrationshemmschicht 3 Risse, so wird die darunterliegende Schicht 2, die im Wesentlichen dem ursprünglichen Gemisch aus dem Abdeckmaterial entspricht, durch Ablaugungsvorgänge und Lösungsvorgänge wieder eine Schicht bilden, die als Infiltrationshemmschicht den Eintritt von Niederschlagswasser zumindest hemmt.

## Patentansprüche

1. Rückstandssalzhalde (1) mit einer Abdeckung, wobei die Abdeckung einen verminderten Anfall von niederschlagsbedingtem Haldenwasser zur Folge hat, wobei die Abdeckung ein Gemisch aus Rückstandssalz, sowie 1 bis 10 Masse-% eines mineralischen, schwer bis unlöslichen Additivs mit ausschließlich hydraulisch und/oder puzzolanisch abbindenden Eigenschaften als Asche aus der Verbrennung von Braunkohle sowie Gips aufweist, wobei die Abdeckung eine Infiltrationshemmschicht (3) bildet, die über die Zeit in der Lage ist, sich immer wieder selbst zu regenerieren, wobei die Infiltrationshemmschicht einen Zuwachs von ca. 0,8 bis 1 cm pro Jahr aufweist, wobei die Abdeckung eine Mächtigkeit von ca. 10 m aufweist.

2. Rückstandssalzhalde nach Anspruch 1,
**dadurch gekennzeichnet,**
**dass** der Anteil des Additivs als zweiter Feststoffanteil neben dem Rückstandssalz am Gesamtfeststoffanteil des Gemisches 3 bis 7 Masse-% beträgt.

3. Rückstandssalzhalde nach einem der vorangehenden Ansprüche,
**dadurch gekennzeichnet,**
**dass** der Reibungswinkel des Gemisches aus Additiv und Rückstandsalz in etwa dem Reibungswinkel des Rückstandssalzes entspricht.

## Claims

1. A residue salt pile (1)
comprising a covering, wherein the covering has the result of a reduced accumulation of pile waste water caused by precipitation, wherein the covering comprises a mixture of residue salt and 1 to 10 wt.% of a mineral additive that is difficult to dissolve up to insoluble and that has exclusively hydraulically and/or puzzolanically setting properties as an ash from the incineration of brown coal and gypsum, wherein the covering forms an infiltration inhibiting layer (3) that is able to regenerate itself over and over again over time, wherein the infiltration inhibiting layer has a growth of approximately 0.8 to 1 cm per year, and wherein the covering has a thickness of approximately 10 m.

2. A residue salt pile in accordance with claim 1,
**characterized in that**
the proportion of the additive as the second solid portion in the total solid portion of the mixture in addition to the residue salt amounts to 3 to 7 wt.%

3. A residue salt pile in accordance with one of the preceding claims,
**characterized in that**
the friction angle of the mixture of additive and residue salt approximately corresponds to the friction angle of the residue salt.

## Revendications

1. Terril de résidus salins (1)
comprenant une couche de couverture, la couche de couverture entraînant une production réduite d'eau de terril liée aux précipitations, la couche de couverture comportant un mélange de résidus salins, ainsi que de 1 à 10 %mas d'un additif minéral difficilement soluble à insoluble ayant des propriétés de liaison uniquement hydraulique et/ou pouzzolanique sous forme de cendre provenant de la combustion de lignite ainsi que de plâtre, la couche de couverture formant une couche anti-infiltration (3), qui est capable au cours du temps de toujours s'auto-régénérer, la couche anti-infiltration présentant une croissance d'environ 0,8 à 1 cm par an, la couche de recouvrement présentant une épaisseur d'environ 10 m.

2. Terril de résidus salins selon la revendication 1,
**caractérisé en ce que**
la part de l'additif en tant que deuxième teneur en matières solides outre les résidus salins par rapport à la teneur totale en matières solides du mélange est de 3 à 7 %mas.

3. Terril de résidus salins selon l'une des revendications précédentes,
**caractérisé en ce que**
l'angle de frottement du mélange d'additif et de résidus salins correspond approximativement à l'angle de frottement des résidus salins.
